# EUROPEAN PATENT APPLICATION

(11) **EP 4 645 083 A1**
(43) Date of publication of application: **05.11.2025**
(21) Application number: 24173525.7
(22) Date of filing: 30.04.2024
(51) Int. Cl.: G06F 9/50

(54) **A METHOD FOR AGGREGATING A REMOTE SERVER**

(71) Applicant: ABB SCHWEIZ AG, 5400 Baden (CH)
(72) Inventor: BRAUN, Roland, 53859 Niederkassel Lülsdorf (DE); NAVDAL, Torgeir, 5417 Stord (NO)
(74) Representative: Maiwald GmbH

(57) **Abstract**

A method for aggregating a remote server (120, 130) is described, including:
- identifying at least a first remote server (120) and a second remote server (130), which are both allocated and/or coupled to a single first device (140); and
- assigning a write task and/or a method execution task, which is to be executed for the single first device (140), solely to the first remote server (120), or solely to the second remote server (130), particularly for avoiding multi-assignment of the write task and/or the method execution task to the single first device (140).

## Description

### Background

An aggregating OPC UA Server can replicate the address space of other OPC UA Servers providing a consolidated, coherent representation of distributed address spaces of individual OPC UA Servers and can be seen as a proxy for remote OPC UA Servers. Redundant functionality of devices are applied in a distributed control system to achieve an improved functional reliability. For instance, redundant sensors are typically used to increase the availability of critical sensor values. Redundant actuators are used to secure the execution of critical functions.

### Detailed description of the invention

An aggregating server can provide a bridge a between a Distributed Control System (DCS) and Process-Equipment-Assemblies (PEAs), particularly in context of modular automation. The process-equipment-assemblies can include single devices, which can be integrated in the DCS in a redundant configuration.

A method for aggregating remote servers, which support redundant configurations, can take into account whether the redundancy is based on redundant interfaces connecting a single device or a single application, or whether the redundancy is based on separate individual devices or separate individual applications.

Accordingly, the present invention is directed to a method for aggregating a remote server, an aggregating server, a computing device, a computer-readable medium and a use of an aggregating server as described in the independent claims. Advantageous modifications of the invention are stated in the dependent claims. All combinations of at least two of the features disclosed in the description, the claims or the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment more clear, but this does not imply the presence of certain features.

To achieve these and other advantages and in accordance with the purpose of the invention, as embodied and broadly described herein, there is provided a method for aggregating a remote server or a plurality of remote servers, including the following steps: In a step, at least a first remote server and a second remote server are identified, wherein both remote servers are allocated and/or coupled to a single first device. In a further step, a write task and/or a method execution task, which is to be executed, or intended, for the single first device, is assigned solely to the first remote server, or solely to the second remote server, particularly for avoiding multi-assignment of the write task and/or the method execution task to the single first device.

The term "server" may be a software component or a hardware component. In case the server is a hardware component, it may comprise several software servers. Similarly, a client may be a software component or a hardware component. In this disclosure, "server" and "client" are used as if they were a hardware component, however, it is understood that they may be also software components without limitations resulting therefrom.

The respective remote server can be a remote OPC UA server (Open Platform Communications Unified Architecture: OPC UA). The method can be performed by an aggregating server, particularly performed by an OPC UA aggregating server.

OPC UA is a standard specification defining communication of on-line data from various devices including devices from different manufacturers. A Distributed Control System (DCS) can run on OPC UA-connected devices. OPC UA is a platform-independent service oriented client-server architecture, which transports machine data as control values, measurement values and parameters, and describes the machine data semantically.

The aggregating server can be seen as a core of an aggregation architecture of a distributed control system. The aggregating server can couple remote servers, particularly via (OPC UA) services, and can aggregate their type, instance and structure information. Thus, a single aggregating server can be used to connect to multiple other remote servers for representing their information in a unified manner. This way, a client connecting to the aggregating server can access the data of multiple remote servers from a single source. The aggregating (OPC UA) server can be an (OPC UA) client for the aggregated (OPC UA) server,

Remote servers aggregated by the aggregating server can be called aggregated servers and can represent entities of an automation system. These remote servers are the underlying servers, which can either represent a single component, e.g., a field device, or a subsystem that consists of a set of components, parts of the automation system or the entire automation system.

During its start phase the aggregating server can create a consolidated image of any of the address spaces of other aggregated (OPC UA) servers. The result can be an aggregated address space that represents all nodes from other remote servers. The aggregating server is familiar with the plurality of nodes involved in the aggregated address space and can be seen as a proxy of the plurality of nodes in the remote address space. The aggregating server is configured to synchronize the proxy-nodes with their respective counterparts in the address spaces on remote, particularly by means of launched sessions with the remote servers.
A nodeset file, representing an application specific part address space can be generated by browsing the address space of an (OPC UA) server.

The respective (OPC UA) server can support information models, which define, how the information is typed and classified. The representation of this information can be called servers address space. A (OPC UA) client can be an application that connects to a (OPC UA) server. Clients can be used, for example, to find information from the server's address space, to read and write server data, to subscribe to certain changes such as data changes, or events such as alarms, and to call server methods. The communication between clients and servers can be handled by services. The address space is the actual representation of the information that a (OPC UA) server exposes. The address space can be formed by nodes and references, which can be explored and displayed by a (OPC UA) client. A node can be seen like an object in object-oriented programming languages. A node can comprise attributes, methods, and events. Attributes can have values, which can be read, methods can be called by a command, and events can be sent to exchange certain information between devices. Events can be alarms and conditions, occurring e.g. at a data change. An event can comprise a reception time stamp, a message and a degree of severity. References can be used to relate nodes to each other and attributes are used to describe a node. The information model is based on the nodes. The nodes that are created and managed by the aggregated servers can form the remote address space. The counterpart to the remote address space can be the aggregated address space, which can be formed by the nodes in the aggregating server.

An (OPC UA) application can be a (OPC UA) server or a (OPC UA) client, which support an invocation of methods. An (OPC UA) server can implement a "Method", the (OPC UA) client can invoke using an (OPC UA) specified service "Call". According to the OPC UA specified address space model a method can handle input- and output - arguments. The data types applied on those arguments can be even complex structured data types.

Assigning a task, or service request, to a device can mean that the task is invoked on a respective remote server by forwarding the related task, or service request, to the device, wherein the respective remote server is coupled to the device.

The single first device can be a device like a field device of a distributed control system and can include a sensor and/or an actuator and/or systems, including a plurality of sensors and a plurality of actuators. The sensor and/or the actuator can be signally coupled within the distributed control system by means of an aggregated server, which is assigned and/or embedded to the single device.

The first remote server and a second remote server can both be, particularly logically, assigned and/or coupled to the single first device, wherein the single first device is configured to be interface redundant.

Interface redundancy can be used to improve communication reliability, where one physical device is implemented by means of a plurality of redundant servers. Writing a value twice is not necessary in this configuration, because of internal communication between the redundant servers. Calling an execution of a method twice, which might result on the redundant configuration based on two servers, can result in a faulty control of the device, particularly if execution of the method by the device performs an increment or decrement-like function.

Advantageously, the aggregating method, i.e. an aggregating service, describe above, can handle interface redundant configurations of external resp. remote (OPC UA) servers with a single device correctly, particularly taking into account the respective redundant configuration by means of a configuration file.

According to an aspect, the first remote server and the second remote server can be logically assigned and/or coupled to the single first device to provide interface redundancy for the single device.

The term "interface redundancy" for the single first device can mean that the single device and the respective servers coupled to the single first device are configured according to an interface redundant configuration.

According to an aspect, the method for aggregating a plurality of a remote servers can be performed by an aggregating server, which is signally coupled to the first remote server and the second remote server.

According to an aspect, the first remote server and the second remote server are both allocated and/or coupled to the single first device to provide interface redundancy for the single first device.

According to an aspect, the write task and/or the method execution task is requested by a client, particularly wherein the client is signally coupled the aggregating server.

According to an aspect, the method for aggregating the remote server or a plurality of remote servers further includes the following steps. In a step, a third remote server, which is logically assigned and/or coupled to a second device, is identified. In a further step, a fourth remote server, which is logically assigned and/or coupled to a third device, is identified. Furthermore, the second device and the third device are functional redundant. In a further step, a write task and/or a method execution task, which is to be executed, or intended, for the second device, is invoked on the third remote server by forwarding the related service request. Additionally, in a further step a write task and/or a method task, which is to be executed by the third device, is invoked on the fourth remote server by forwarding the related service request.

In this setup of the servers and devices as described, the third remote server and the fourth remote server can be described to be in a functional redundant, or application operation redundant, configuration with the second device and the third device.

Functional redundancy, or device redundancy, can be used to improve reliability of a technical function. This functional redundancy can be based on at least two redundant devices, which are coupled or implemented each by individual servers. Writing a value twice or calling an execution of a method twice can be mandatory.

Concerning the functional redundancy of devices, as e.g. actuators, their arrangement shall be set based on a safe state of the system they are integrated in. For example, if the safe state is an open valve, functional redundant valves can be arranged in an operational parallel configuration. A write service on both output values will do its best to achieve at least that one valve opens. A write service on both output values must be written to close each valve in this set up.

If alternatively, the safe state is a closed valve, the two valves will be arranged in a row. A write task, or write service, on both output values of the valve will do its best to achieve at least one valve closes. Opening of such an arrangement can be achieved only if both valves are provided with respective output values. If the (OPC UA) server of an actuator implements methods to operate the actuator, the same concerns apply.

An application of different devices of the same type, but manufactured differently, e.g. by different vendors, can help to avoid common cause failures.

Application of OPC UA can provide standardized information models that envision the concept of a harmonized application programming interface (API), where a single specified variable can be used similar to an analog current signal. However, the method for aggregating a remote server, as describe here, can provide a solution that can work even if the installed devices do not implement an OPC UA standardized information model (OPC UA Companion Specification).

If functional redundancy is made from different OPC UA connected devices of the same type, including products of different vendors, functional redundancy can be provided only for an operation of the devices. The devices' functions become accessible through the variables or methods, implemented by the address space of the device embedded, or coupled, (OPC UA) server.

Advantageously, by differentiation of the redundancy configuration as described above, operational difference for functional redundancy and interface redundancy can be taken into account. The method described for functional redundancy can e.g. make sure that both redundant devices, the second device and the third device, are provided with the respective write task and/or the respective method execution task accordingly. The aggregating method, i.e. an aggregating service, can manage redundancy configurations of external or remote (OPC UA) servers. The aggregating (OPC UA) server and the aggregating method as described here, can support both redundancy configurations, or redundancy modes, based on configuration data, which can be provided by a configuration file.

Advantageously, the method for aggregating a remote server can support operation of redundant (OPC UA) servers for different redundancy configurations.

According to an aspect, the method for aggregating the remote server or a plurality of remote servers includes the following steps. In a step, it is determined, whether a specific variable generated by the second redundant device and the third redundant device is safety relevant. In a further step, a value of the specific variable provided by the third remote server can be compared with a value of the safety relevant variable provided by the fourth remote server, if the specific variable is safety relevant. In a further step, an error handling can be performed, if a deviation of the compared values exceeds a predefined threshold.

According to an aspect, the method for aggregating the remote server or a plurality of remote servers includes the following steps. In a step, a fifth remote server is identified, which is logically assigned to and/or coupled to a fourth device. However, the second device and the third device and the fourth device are redundant, particularly in a functional redundant configuration. In a further step, a value of the specific variable provided by the fifth remote server can be compared with each value of the safety relevant variable provided by the third remote server and the fourth remote server, particularly for determining a faulty remote server and/or a faulty device of the respective three devices.

The value provided by the respective remote server can be requested by a read task, or read call of a client.

According to an aspect, a first value can be determined by means of a read task based on a first viable session found in a list of redundant sessions.

According to an aspect, the method for aggregating the remote server or a plurality of remote servers includes the following steps. In a step, a functionality of the respective remote server is monitored, particularly by the respective remote server. In a further step, a message of the respective remote server is provided, particularly to the aggregating server.

This functionality can be implemented by a subscription functionality of monitored items, as for instance on all redundant (OPC UA) servers. This ensures updates are received even if one of the other redundant (OPC UA) server session disappears temporarily. Since OPC UA Subscriptions can be used to monitor and manage alarms, as example for a condition, the invocation of methods to manage alarms can be treated according to the execution pattern considering the current redundancy mode. Subscriptions are restored automatically once a redundant OPC UA Server re-appears.

According to an aspect, at least one of the respective remote server is an OPC UA server. Alternatively, or additionally, the client is an OPC UA client. Alternatively, or additionally, the method is performed by an aggregating server, particularly performed by an OPC UA aggregating server.

Particularly, the first and/or the second aggregated server and/or the third aggregated server and/or the fourth aggregated server each are OPC UA aggregated servers. Alternatively, or additionally, the client is an OPC UA client. Alternatively, or additionally, the method is performed by an aggregating server is particularly performed by an OPC UA aggregating server.

According to an aspect of the method for aggregating the remote server or a plurality of remote servers, the at least first remote server and/or the second remote server and/or the third remote server and/or the fourth remote server are identified by means of a configuration file, which particularly is coupled and/or integrated to the aggregating server.

Advantageously, the aggregating method, i.e. performed by an aggregating service, can manage different types of redundancy configurations of remote, or external, (OPC UA) servers, particularly by means of a configuration file.

According to an aspect, the configuration file can include a redundancy group, grouping and/or listing remote servers configured in redundant configurations.

According to an aspect, an aggregating server is proposed, including a processor, and a first interface for signally coupling the aggregating server to a plurality of remote servers, and including a second interface to signally couple the aggregating server to a client. Furthermore, the aggregating server can be configured to perform the following steps. In one step, at least a first remote server and a second remote server of the plurality of remote servers are identified, which are both allocated and/or coupled to a single first device. In a further step, a write task and/or a method task, which is to be executed for the single first device, is assigned solely to the first remote server, or solely to the second remote server, for avoiding multi-assignment of the write task and/or the method task to the single device.

According to an aspect, an aggregating server is proposed, including a processor and a first interface for signally coupling the aggregating server to a plurality of remote servers, and including a second interface to signally couple the aggregating server to a client. The aggregating server can be configured to map a remote address space of solely one remote server of a plurality of remote servers, which are each assigned and/or coupled to a single first device, to an aggregated address space of the aggregating server, for any write task and/or any method task to be executed by the single first device.

According to an aspect, the aggregating server is configured to map the remote address space of the solely one remote server to the aggregated address space of the aggregating server by performing the following steps. In one step, at least a first remote server and a second remote server of the plurality of remote servers are identified, which are both allocated and/or coupled to a single first device. In a further step, a write task and/or a method task are assigned, which is to be executed by the single first device, solely to the first remote server, or solely to the second remote server, particularly for avoiding multi-assignment of the write task and/or the method task to the single first device.

According to an aspect, the aggregating server is configured to perform a method as described above.

A computing device is proposed including a processor configured to perform any one of the methods as described above.

A computer-readable medium is proposed, comprising instructions which, when executed by a computing device, cause the computing device to carry out a method of any one of the methods as described above.

A use of any one of the aggregating servers as described above for controlling at least a part of a Distributed Control Systems (DCS) is proposed.

### Brief description of the drawings

The accompanying drawings, which are included to provide a further understanding of the invention and are incorporated in and constitute a part of this application, illustrate embodiments of the invention and together with the description serve to explain the principle of the invention. The drawings display:
- FIG. 1: aggregating servers for interface redundancy;
- FIG. 2: aggregating servers for redundant devices;
- FIG. 3: a flowchart performing a write task with redundant configurations;
- FIG. 4: a flowchart performing a method execution task with redundant configurations; and
- FIG. 5: a flowchart performing a read task with redundant configurations.

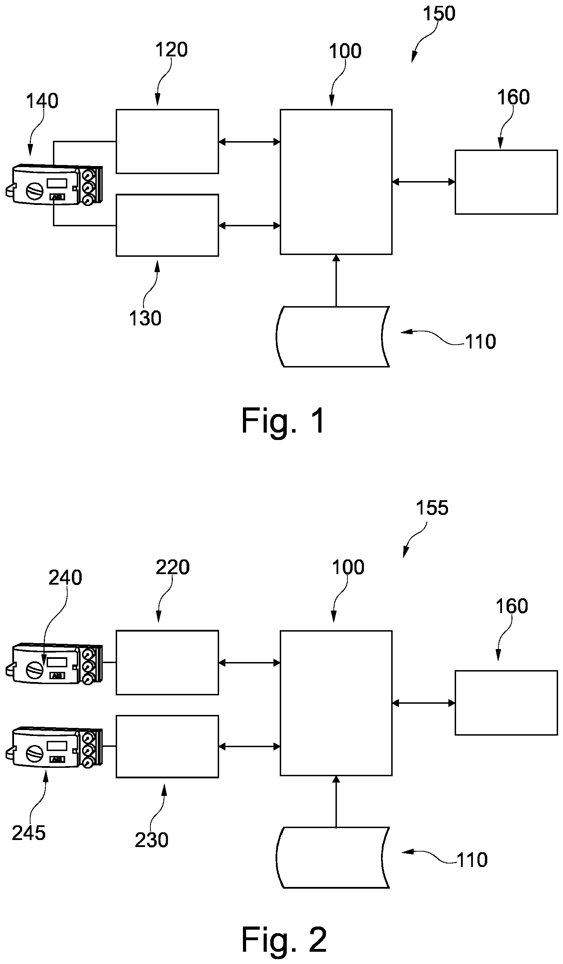

Figure 1 sketches schematically an architecture of a distributed control system 150 including an interface redundancy configuration of a single first device 140. The distributed control system 150 includes an aggregating server 100, which is coupled to a first remote server 120 and to a second remote server 130, which are both allocated and/or coupled to the single first device 140. A client 160 of the distributed control system can be coupled to the aggregating server 100. The aggregating server 100 can be signally coupled to a configuration file 110.

Figure 2 sketches schematically an architecture of a distributed control system 155 with a device redundancy configuration including a second device 240 and a third device 245. The distributed control system 155 includes the aggregating server 100, which is coupled to a third remote server 220 and to a fourth remote server 230, which are each individual allocated and/or coupled to the respective remote server. A client 160 of the distributed control system can be coupled to the aggregating server 100. The aggregating server can be signally coupled to the configuration file 110.

The method described below can refer to the architecture of the distributed control system 150 and/or 155 as described by figure 1 or 2.

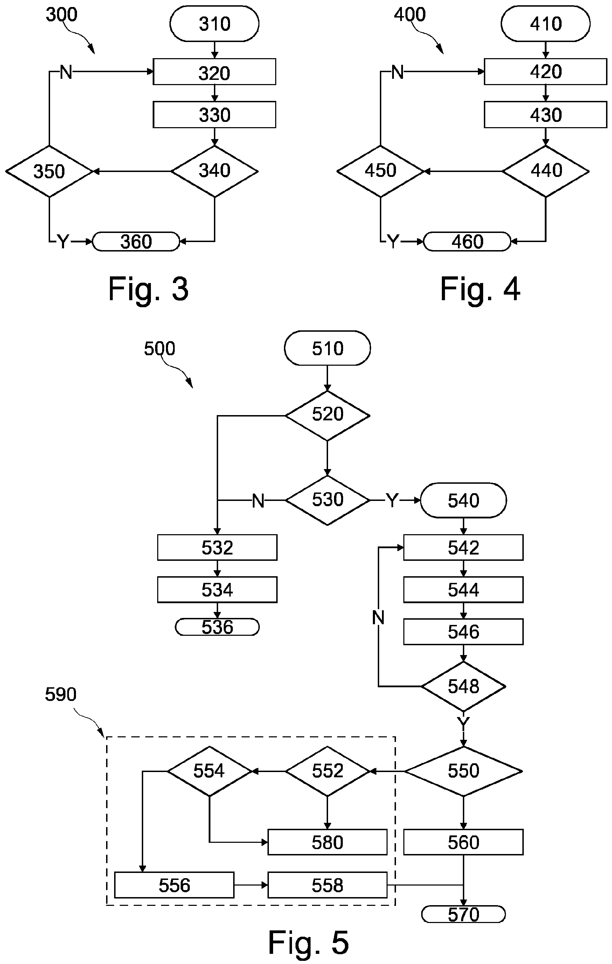

Figure 3 schematically sketches a flowchart 300 for performing a write task by means of an aggregating server 100 with interface redundant configurations of remote servers and/or functional redundant configurations of remote servers, wherein the architecture of these configurations are described above according to figure 1 or figure 2 respectively.

At step 310, the aggregating server 100 receives a write task, particularly of a client 160, which is connected to the aggregating server 100. At step 320, the aggregating server 100 can identify sessions of the aggregating server 100 with remote servers concerned with a redundant configuration, for instance by means of a configuration file 110. The configuration file 110 can be coupled and/or integrated to the aggregating server 100, wherein the configuration file 110 includes information about remote servers, which are concerned with redundant configurations within the distributed control system 150, 155. At step 330, the aggregating server 100 can request the write task, which is to be executed for a device in an interface redundant configuration or functional redundant configuration, to a remote server assigned to a device. The remote server concerned can be accessed by a currently readily accessible session between the aggregation server 100 and the remote server. The aggregating server 100 can be configured to identify at step 340, particularly by means of the configuration file 110, whether the write task is to be executed for a device in an interface redundant configuration or functional redundant configuration. If the write task is to be executed for a device in an interface redundant configuration, the aggregated server 100 finishes the write task at step 360.

For instance, that can mean, that the aggregating server 100 is configured to identify, whether at least a first remote server 120 and a second remote server 130 are both allocated and/or coupled to a single first device 144 for an interface redundant configuration. In this case, a write task, which is to be executed for the single first device 140, is assigned solely to the first remote server 120, or solely to the second remote server 130, for avoiding multi-assignment of the write task to the single device 140.

If the write task is to be executed for a plurality of devices in a functional redundant configuration, the aggregating server 100 is configured to continue the write task for all sessions with remote servers related to the plurality of device in the functional redundant configuration, until at step 350 the last redundant session for a device in a functional redundant configuration is identified and the respective write task is assigned, particularly to make sure that all redundant devices in a functional redundant configuration, are provided with the respective write task accordingly.

For a functional redundant configuration this can mean for instance, that the aggregating server 100 is configured to assign a write task, which is to be executed for the second device 240, to the third remote server 220 and to assign a write task, which is to be executed by the third device 245, to the fourth remote server 230, particularly to make sure that both redundant devices, the second device 240 and the third device 245, are provided with the respective write task accordingly.

Figure 4 schematically sketches a flowchart 400 for performing a method execution task by means of an aggregating server 100 with interface redundant configurations of remote servers and/or functional redundant configurations of remote servers, wherein the architecture of these configurations are described above according to figure 1 or figure 2 respectively.

The flowchart of the method for performing a method execution task according to figure 4 can be described identical to the description of figure 3 by exchanging the write task to the method execution task.

Figure 5 schematically sketches a flowchart 500 for performing a read task by means of an aggregating server 100 with interface redundant configurations of remote servers and/or functional redundant configurations of remote servers, wherein the architecture of these configurations are described above according to figure 1 or figure 2 respectively.

At step 510, the aggregating server 100 can receive a read task, particularly of a client 160, which is connected to the aggregating server 100. At step 520, the aggregating server 100 identifies sessions of the aggregating server 100 with remote servers concerned with a functional redundant configuration or interface redundant configuration, for instance by means of a configuration file 110, which particularly is coupled and/or integrated to the aggregating server 100, wherein the configuration file 110 includes information about remote servers which are concerned with functional or interface redundant configurations within the distributed control system 150, 155.

If the read task is to be executed for a device in an interface redundant configuration the aggregated server 100 is configured to identify the related session at step 532 and assigns the read task to the respective remote server at step 534 and finishes the read task at step 536.

If the read task is to be executed for a plurality of devices in a functional redundant configuration the aggregating server 100 is configured to identify at step 530, for instance by means of the configuration file 110, whether the variable to be read a safety relevant and starts a read of the safety relevant variable at step 540 by identifying the related session at step 542. At step 544, the aggregating server 100 is configured to assign the read task to the respective remote server and stores the read value provided by the respective remote server at step 546. The steps 542, 544 and 546 are repeated until the last session related to the safety relevant variables of the plurality of devices is completed.

At step 548, the values of the safety relevant specific variables of the plurality of devices are compared with each other to identify a deviation, which exceeds a predefined threshold. If the comparison of the values of the safety relevant specific variables of the plurality of devices does not exceed the predefined threshold a status of the values of safety relevant specific variables of the plurality of devices can be defined as "GOOD" at step 560 and the read task is finalized at step 570. If the comparison of the values of the safety relevant specific variables of the plurality of devices does exceed the predefined threshold at step 550 an error handling process 590 can be started.

The error handling process 590 can start with step 552 by counting a number of safety relevant specific variables of the plurality of devices and comparing the number with a count of two. If the number of safety relevant specific variables is equal to two, these two specific variables can be assigned to a status of "BAD_UNCERTAIN".

If the number of safety relevant specific variables exceeds the count of two the specific variables of the plurality of devices can be compared at step 554, for determining, whether a majority of the specific variables match each other. If the minority of the specific variables does not match, the values of the specific variables can be assigned to a status of "BAD_UNCERTAIN" at step 580. If the majority of the specific variables match, the matching specific variables can be assigned to a ValueStatus of "GOOD" at step 556 and the not matching specific variables can be assigned to a ValueStatus of ""BAD_UNCERTAIN" at step 558 and the read task can be finalized at step 570.

Using other words, if functional redundancy for two sensors is configured to achieve higher safety, there can be a need to read and compare values from both coupled redundant OPC UA Servers that run on separate devices (FunctionalRedundancy). The comparison of the values can be compared to the tolerance limit that can be configured. The tolerance limit for deviations of the values of functional redundant configurations can be configured globally for all critical, redundant variables or per individual variable. A threshold to detect a critical deviation either can be a fixed value or can be referred to a limited percentage delta. In this case, the Aggregating Service of an aggregating server can consider a redundancy mode or redundancy configuration. If at least three OPC UA Servers belong to a single redundancy group listing the remote servers involved in a functional redundant configuration, the Aggregating Service can differentiate between valid and invalid values and thereby detect a faulty device. The Aggregating Service can be configured to check a deviation among all values that have been read from the aggregated OPC UA Servers involved in a functional redundant configuration. For those values that deviate too far, the Aggregating Service can report the status BAD_UNCERTAIN for the other values the Aggregating Service can report the status GOOD. If there are only two OPC UA Servers to support the redundancy, the Aggregating Service can only report the status BAD_UNCERTAIN for the values read from the aggregated OPC UA Servers. The Aggregating Service can be configured to report an alarm for any aggregated OPC UA Server that responded deviating values.

The following describes a first example for a configuration file including XML elements, which is set up to configure an aggregating remote server to handle functional redundant configurations.

Function (Selective) Redundancy can only be used in the context of functional redundancy when, for example, the related OPC UA Servers implement different Information Models or Address Spaces, which can happen because the devices have been manufactured by different vendors. In this case the XML Elements <RedundancyGroup> and <Redundancies> are not applicable, are not present in the configuration.

```
<AggregationConfig xmlns:xsi="http://www.w3.org/2001/XMLSchema-instance"
       xmlns:ua="http://opcfoundation.org/UA/2008/02/Types.xsd"
       xmlns:ihua="http://www.abb.com/2018/lnterfaceHandler/Ua/Aggregation/Config"
       xmlns="http://www.abb.com/2023/lnterfaceHandler/Ua/Aggregation/Config">
       <Aggregate Connectionld="S1">
       <OnlineAggregated uri="opc.tcp://localhost:50050"/>
       </Aggregate>
       <Aggregate Connectionld="S2">
       <OnlineAggregated uri="opc.tcp://localhost:50051"/>
       </Aggregate>
       <Redundancies>
       <RedundancyGroup Mode=" Functional Redundancy">
       <RedundantServer Connectionld="S1"/>
       <RedundantServer Connectionld="S2"/>
       </RedundancyGroup>
       </Redundancies>
       <ServerList>
       <Server uri="opc.tcp://localhost:50050"/>
       <Server uri="opc.tcp://localhost:50051"/>
       </ServerList>
       <Namespaces>
       <Namespace uri="http://ABB.com/UA/Demo/Types"/>
       </Namespaces>
       </AggregationConfig>
```

The configuration file listed above shows an example for FunctionalRedundancy involving two devices of the same type. The applied syntax is XML. The configuration file follows a predefined schema. XML Elements <Aggregate> are used to describe the OPC UA Servers that shall be aggregated. XML Attribute Connectionld is used like a key-value to be used to build a look-up table of OPC UA servers that shall be aggregated and to retrieve these entries in the look-up table. XML Element <OnlineAggregated> lists the OPC UA Servers that shall be aggregated. XML Attribute uri describes the address of the OPC UA Server. XML Element <Redundancies> is meant to organize the configuration of redundant OPC UA Servers. XML Element <RedundancyGroup> describes a group of redundant OPC UA Servers by referring them by means of the value assigned to XML Attribute Connectionld that is found in XML Element <RedundantServer>. The value "FunctionalRedundancy" assigned to XML Attribute Mode declares for the Aggregating Service of the aggregating server the referred group of redundant OPC UA Servers is found in separate devices.

The following describes a second example for a configuration file including XML elements according to the first example, which is set up to configure an aggregating remote server to handle interface redundant configurations. Interface redundancy describes the redundancy of two OPC UA Servers that are found embedded in a single device. This is described by value "interfaceRedundancy" assigned to XML Attribute Mode.

The aggregating server runs the aggregation process based on described configuration data. This means essentially to browse and read the Address Space of an OPC UA server that shall be aggregated. Independent from the aggregation mode, the Address Spaces of all OPC UA Servers belonging to the same Redundancy Group are identical. Therefore, Read & Browse Services are executed on one of the aggregated OPC UA Servers. The first viable session found in a list of redundant sessions is used. The redundancy mode does not matter.

```
<AggregationConfig xmlns:xsi="http://www.w3.org/2001/XMLSchema-instance"
       xmlns:ua="http://opcfoundation.org/UA/2008/02/Types.xsd"
       xmlns:ihua="http://www.abb.com/2018/lnterfaceHandler/Ua/Aggregation/Config"
       xmlns="http://www.abb.com/2023/lnterfaceHandler/Ua/Aggregation/Config">
       <Aggregate Connectionld="S1">
       <OnlineAggregated uri="opc.tcp://localhost:50050"/>
       </Aggregate>
       <Aggregate Connectionld="S2">
       <OnlineAggregated uri="opc.tcp://localhost:50051"/>
       </Aggregate>
       <Redundancies>
       <RedundancyGroup Mode="InterfaceRedundancy">
       <RedundantServer Connectionld="S1"/>
       <RedundantServer Connectionld="S2"/>
       </RedundancyGroup>
       </Redundancies>
       <ServerList>
       <Server uri="opc.tcp://localhost:50050"/>
       <Server uri ="opc.tcp:Hlocal host: 50051"/>
       </ServerList>
       <Namespaces>
       <Namespace uri="http://ABB.com/UA/Demo/Types"/>
       </Namespaces>
       </AggregationConfig>
```

## Claims

1. A method for aggregating a remote server (120, 130), comprising:
identifying at least a first remote server (120) and a second remote server (130), which are both allocated and/or coupled to a single first device (140); and
assigning a write task and/or a method execution task, which is to be executed for the single first device (140), solely to the first remote server (120), or solely to the second remote server (130), particularly for avoiding multi-assignment of the write task and/or the method execution task to the single first device (140).

2. The method according to claim 1, wherein the method for aggregating a remote server is performed by an aggregating server (100), which is signally coupled to the first remote server (120) and the second remote server (130); and/or the first remote server (120) and the second remote server (130) are both allocated and/or coupled to the single first device (140) to provide interface redundancy for the single first device (140).

3. The method according to claim 1 or 2, wherein the write task and/or the method execution task is requested by a client (160), particularly wherein the client (160) is signally coupled the aggregating server (100).

4. The method according to any one of the preceding claims, comprising:
identifying a third remote server (220), which is logically assigned and/or coupled to a second device (240);
identifying a fourth remote server (230), which is logically assigned and/or coupled to a third device (245); wherein the second device (240) and the third device (245) are functional redundant;
assigning a write task and/or a method execution task, which is to be executed for the second device (220), to the third remote server (240); and
assigning a write task and/or a method task, which is to be executed by the third device (245), to the fourth remote server (230); particularly to make sure that both redundant devices (240, 245), the second device (240) and the third device (245), are provided with the respective write task and/or the respective method execution task accordingly.

5. The method according to claim 4, comprising:
determining, if a specific variable generated by the second redundant device and the third redundant device is safety relevant;
comparing a value of the specific variable provided by the third remote server (220) with a value of the safety relevant variable provided by the fourth remote server (230), if the specific variable is safety relevant; and
performing an error handling, if a deviation of the compared values exceeds a predefined threshold.

6. The method according to claim 5, comprising:
identifying a fifth remote server, which is logically assigned and/or coupled to a fourth device; wherein the second device (240) and the third device (245) and the fourth device are redundant;
comparing a value of the specific variable provided by the fifth remote server with each value of the safety relevant variable provided by the third remote server (220) and the fourth remote server (230), particularly for determining a faulty remote server and/or a faulty device of the three devices.

7. The method according to any one of the preceding claims, comprising:
monitoring a functionality of the respective remote server, particularly by the respective remote server; and
providing a message of the respective remote server, particularly to the aggregating server (100).

8. The method according to any one of the preceding claims, wherein at least one of the respective remote server (120, 130, 220, 230) is an OPC UA server; and/or wherein the client (160) is an OPC UA client and/or wherein the method is performed by an aggregating server (100), particularly performed by an OPC UA aggregating server.

9. The method according to any one of the preceding claims, wherein the at least first remote server (120) and/or the second remote server (130) and/or the third remote server (220) and/or the fourth remote server (230) are identified by means of a configuration file (110), which particularly is coupled and/or integrated to the aggregating server (100).

10. An aggregating server (100), comprising:
a processor;
a first interface for signally coupling the aggregating server (100) to a plurality of remote servers (120, 130, 220, 230); and
a second interface to signally couple the aggregating server (100) to a client (160);
wherein the aggregating server (100) is configured to map a remote address space of solely one remote server of a plurality of remote servers (120, 130), which are each assigned and/or coupled to a single first device (140), to an aggregated address space of the aggregating server (100), for any write task and/or any method task to be executed by the single first device (140).

11. The aggregating server (100) according to claim 10,
wherein the aggregating server (100) is configured to map the remote address space of the solely one remote server (120, 130) to the aggregated address space of the aggregating server (100) by performing:
identification of at least a first remote server (120) and a second remote server (130) of the plurality of remote servers, which are both allocated and/or coupled to a single first device (140); and
assigning a write task and/or a method task, which is to be executed by the single first device (140), solely to the first remote server (120), or solely to the second remote server (130), particularly for avoiding multi-assignment of the write task and/or the method task to the single first device (140).

12. The aggregating server according to claim 11,
wherein the aggregating server (100) is configured to perform a method according to any one of claims 2 to 9.

13. A computing device comprising a processor configured to perform a method according to any one of claims 1 to 9.

14. A computer-readable medium comprising instructions which, when executed by a computing device, cause the computing device to carry out a method of any one of claims 1 to 9.

15. Use of an aggregating server (100) according to any one of claims 10 to 12 for controlling at least a part of a Distributed Control Systems (DCS) (150, 155).
